# EUROPÄISCHE PATENTSCHRIFT

(11) **EP 3 502 493 B1**
(45) Veröffentlichungstag und Bekanntmachung des Hinweises auf die Patenterteilung: **20.01.2021**
(21) Anmeldenummer: 18205588.9
(22) Anmeldetag: 12.11.2018
(51) Int. Cl.: F16C 7/02, F01M 1/06, F16C 33/10, F01M 1/08

(54) **VORRICHTUNG UND VERFAHREN ZUM SCHMIEREN EINES PLEUELLAGERS**
DEVICE AND METHOD FOR LUBRICATING A CONNECTING ROD BEARING
DISPOSITIF ET PROCÉDÉ DE LUBRIFICATION D'UN PALIER DE BIELLE

(30) Priorität: 20.12.2017 DE 102017130690
(43) Veröffentlichungstag der Anmeldung: 26.06.2019
(73) Patentinhaber: MAN Truck & Bus SE, 80995 München (DE)
(72) Erfinder: Malischewski, Thomas, 91560 Heilsbronn (DE); Dietrich, Jens, 91560 Heilsbronn (DE); Hirschmann, Steffen, 91413 Neustadt an der Aisch (DE); Renner, Dominik, 91522 Ansbach (DE)
(74) Vertreter: v. Bezold & Partner Patentanwälte - PartG mbB

(56) Entgegenhaltungen:
- WO-A1-00/63538
- DE-A1- 4 135 237
- DE-U1- 29 723 973
- JP-A- H 094 463
- JP-A- 2005 331 056

## Beschreibung

Die Erfindung betrifft eine Vorrichtung und ein Verfahren zum Schmieren eines Pleuellagers an einer Kurbelwelle einer Brennkraftmaschine.

Es ist bekannt, ein Pleuellager an einem Hubzapfen einer Kurbelwelle von innen durch die Kurbelwelle mit Schmieröl zu versorgen. Hierzu kann in einer Hauptlagerschale eines Hauptlagers der Kurbelwelle eine Nut eingebracht sein, die mit Drucköl versorgt ist. Über eine Bohrung in der Kurbelwelle vom Hauptlager zum Pleuellager am Hubzapfen der Kurbelwelle kann das Öl zu dem Pleuellager fließen, solange die Bohrung im Hauptlager mit der Nut der Hauptlagerschale in Überdeckung ist. Eine derartige Schmiervorrichtungen ist beispielsweise aus der DE 10 2004 032 590 A1 bekannt.

Die DE 10 2004 048 939 A1 offenbart ferner eine Pleuelstange, die einen Pleuelstangenkörper mit einer in einem ersten Ende (Pleuelfuß) ausgebildeten Kurbelzapfenbohrung (großes Pleuelauge) und einer in einem zweiten Ende (Pleuelkopf) ausgebildeten Bolzenbohrung (kleines Pleuelauge), aufweist. Die Pleuelstange weist ein Rohr, das mit dem Pleuelstangenkörper verbunden ist, um Schmiermittel vom ersten Ende zum zweiten Ende zu fördern, auf.

An den bekannten Schmiervorrichtungen für Pleuellager kann nachteilig sein, dass die Bohrungen in der Kurbelwelle nur aufwendig und kostenintensiv herzustellen sind. Ferner können die Bohrungen die Dauerhaltbarkeit der Kurbelwelle verringern. Zusätzlich erfordert die Versorgung der Pleuellager mit Schmieröl über die Hauptlagerschalen einen großen Öldurchsatz, der von einer Ölpumpe bereitgestellt werden muss, die hierfür entsprechend dimensioniert und unter Energieverbrauch (Kraftstoffverbrauch) angetrieben werden muss.

Die JP 2005-331056A offenbart in einer gattungsgemäßen Vorrichtung zum Schmieren eines Pleuellagers, einen hohlen Kolbenbolzen, der über radiale Löcher Schmierfluid von einem Kolben aufnimmt und in einen inneren Längskanal eines Pleuels zur Versorgung eines Lagers im großen Pleuelauge abgibt.

Der Erfindung liegt die Aufgabe zu Grunde, eine alternative und/oder verbesserte Vorrichtung bzw. ein alternatives und/oder verbessertes Verfahren zum Schmieren eines Pleuellagers einer Kurbelwelle vorzusehen, mit der/dem insbesondere Nachteile aus dem Stand der Technik überwunden werden können.

Die Aufgabe wird gelöst durch eine Vorrichtung und ein Verfahren gemäß den unabhängigen Ansprüchen. Vorteilhafte Weiterbildungen sind in den abhängigen Ansprüchen und der Beschreibung angegeben.

Die Vorrichtung ist zum Schmieren eines Pleuellagers an einer Kurbelwelle einer Brennkraftmaschine geeignet. Die Vorrichtung weist einen Kolben mit einem Fluidkanal, insbesondere einem inneren Kolbenkühlfluidkanal, und einem Auslasskanal in Fluidverbindung mit dem Fluidkanal auf. Die Vorrichtung weist ein Pleuel, das gelenkig, insbesondere schwenkbar, mit dem Kolben verbunden ist und ein großes Pleuelauge (bzw. eine Kurbelzapfenbohrung) und einen (insbesondere inneren) Verbindungskanal aufweist, auf. Das große Pleuelauge ist zur Aufnahme des Pleuellagers ausgebildet. Der Verbindungskanal bildet die Fluidverbindung zwischen dem Auslasskanal und dem großen Pleuelauge, so dass ein Fluid, insbesondere ein Kühlschmierfluid (z.B. Öl), von dem Fluidkanal über den Auslasskanal und den Verbindungskanal zu dem großen Pleuelauge zuführbar ist oder zugeführt wird.

Damit kann das Pleuellager an der Kurbelwelle mittels Kühlöl von dem Kolben geschmiert werden. Insbesondere kann das Pleuellager mittels Kühlöl aus dem inneren Kolbenkühlkanal des Kolbens geschmiert werden. Das Kühlöl dient somit auch als Schmieröl. Hierdurch wird ermöglicht, alle Schmierölbohrungen in der Kurbelwelle entfallen zu lassen. Dadurch kann die Dauerhaltbarkeit der Kurbelwelle deutlich gesteigert und die Kosten gesenkt werden. Weiterhin können die Lagernuten in den Hauptlagerschalen entfallen, was den Öldurchsatz deutlich minimieren kann und zu Einsparungen beim Kraftstoffverbrauch führen kann.

In einem Ausführungsbeispiel weist der Auslasskanal eine Auslassöffnung in einem, insbesondere gerundeten, Kolbenboden des Kolbens auf. Alternativ oder zusätzlich weist der Verbindungskanal eine Einlassöffnung in einer, insbesondere gerundeten, Außenfläche, insbesondere einer Außenumfangsfläche, eines Pleuelkopfes des Pleuels auf. Damit kann ein Kühlschmierfluid, zum Beispiel Öl, aus dem inneren Kolbenkühlkanal an einem Kolbenboden zum Einleiten in den Verbindungskanal bereitgestellt werden. Das Kühlschmierfluid kann an einem Pleuelkopf des Pleuels in den Verbindungskanal eingeleitet werden. Die Abrundung an dem Kolbenboden und dem Pleuelkopf ermöglichen, dass der Kolbenboden und der Pleuelkopf einander überstreichen, während der Kolben sich aufwärts und abwärts bewegt und damit das Pleuel relativ zum Kolben verschwenkt wird.

In einem weiteren Ausführungsbeispiel weist der Verbindungskanal einen Einlassbereich auf, der durch eine, insbesondere stufenförmige, Ausnehmung in einer Außenfläche, insbesondere einer Außenumfangsfläche, eines Pleuelkopfes des Pleuels gebildet ist. Die stufenförmige Ausnehmung ermöglicht, einen Einlassbereich des Verbindungskanals auf einfache Weise so herzustellen, dass je nach Winkellage zwischen den Kolben und dem Pleuel eine Überdeckung des Einlassbereichs mit der Auslassöffnung des Auslasskanals oder dem Kolbenboden zum Verschließen des Verbindungskanals möglich ist.

In einer Weiterbildung weist der Verbindungskanal eine Schrägbohrung auf, die sich von der Ausnehmung und beabstandet zu einem kleinen Pleuelauge des Pleuels durch den Pleuelkopf zu einem Pleuelschaft des Pleuels erstreckt. Optional weist der Verbindungskanal ferner eine Längsbohrung, die sich von dem großen Pleuelauge durch den Pleuelschaft zu der Schrägbohrung erstreckt, auf. Die Schrägbohrung ermöglicht, dass das kleine Pleuelauge von dem Verbindungskanal umgegangen wird. Ferner sind die Bohrungen auf einfache Weise herzustellen. Die Schrägbohrung kann ausgehend von einer Bodenfläche der Ausnehmung durch den Pleuelkopf bis in den Pleuelschaft gebohrt werden. Die Längsbohrung kann ausgehend von dem großen Pleuelauge durch den Pleuelschaft gebohrt werden, bis die Längsbohrung mit der Schrägbohrung zusammentrifft. Die Bohrungen können jeweils als Sacklochbohrungen ausgeführt werden, die miteinander an ihrem jeweiligen Ende zusammentreffen, um den Verbindungskanal zu bilden.

In einem weiteren Ausführungsbeispiel sind ein Pleuelkopf des Pleuels und ein Kolbenboden des Kolbens so aneinander angepasst, dass ein Abstand zwischen einem an eine Auslassöffnung des Auslasskanals angrenzenden Bereich des Kolbenbodens und einem an eine Einlassöffnung des Verbindungskanals angrenzenden Bereich des Pleuelkopfes kleiner als 0,1 cm, insbesondere kleiner als 0,01 cm, ist. Beispielsweise kann der Abstand zwischen 0,01 cm und 0,001 cm sein. Zur genauen Herstellung des Abstands kann es notwendig sein, die entsprechenden Bereiche des Kolbenbodens und des Pleuelkopfes maschinell feinzubearbeiten. Der geringe Abstand ermöglicht, dass das Fluid aus dem Auslasskanal ohne wesentliche Leckage in den Verbindungskanal einströmen kann. Die auftretende Leckage führt zur Schmierung zwischen den Bereichen. Der geringe Abstand ermöglicht zudem, dass der Verbindungskanal von der Bodenfläche im Wesentlichen verschlossen werden kann, wenn der Kolbenboden die Einlassöffnung des Verbindungskanals überdeckt, zum Beispiel bei einer Abwärtsbewegung des Kolbens und des Pleuels.

In einer Weiterbildung überstreichen der Bereich des Kolbenbodens und der Bereich des Pleuelkopfes einander während einer Schwenkbewegung zwischen dem Kolben und dem Pleuel. Durch die Überstreichbewegung, die den Abstand zwischen den Bereichen hält, besteht die Möglichkeit, dass sich die Auslassöffnung des Auslasskanals und die Einlassöffnung des Verbindungskanals während eines ersten Abschnitts der Schwenkbewegung überdecken. Zusätzlich können sich die Auslassöffnung des Auslasskanals und die Einlassöffnung des Verbindungskanals während eines zweiten Abschnitts der Schwenkbewegung nicht überdecken. Hier kann der Bereich des Kolbenbodens die Verbindungskanals überdecken und somit im Wesentlichen verschließen.

In einer Ausführungsform deckt ein Kolbenboden des Kolbens eine Einlassöffnung des Verbindungskanals während einer Bewegung des Kolbens von einem oberen Totpunkt zu einem unteren Totpunkt, insbesondere zur Verringerung der Kavitationsneigung im Verbindungskanal, ab. Alternativ oder zusätzlich überdeckt eine Auslassöffnung des Auslasskanals eine Einlassöffnung des Verbindungskanals, insbesondere nur, während einer Bewegung des Kolbens von einem unteren Totpunkt zu einem oberen Totpunkt. Damit kann der Verbindungskanal während der Aufwärtsbewegung des Kolbens mit Fluid aus dem Auslasskanal gefüllt werden. Aufgrund der großen Beschleunigung des Kolbens und des Pleuels bei der Aufwärtsbewegung, können hierbei hohe Fluiddrücke, zum Beispiel bis zu 6 bar, erreicht werden, mit dem das Fluid dem Pleuellager zugeführt werden kann. Um eine Kavitation des Fluids im Verbindungskanal während Abwärtsbewegung des Pleuels zu verhindern, kann die Einlassöffnung des Verbindungskanals durch den Kolbenboden des Kolbens während Abwärtsbewegung des Pleuels verschlossen werden. Dadurch kann die Kavitation verhindert oder zumindest verringert werden, wodurch der Durchfluss durch den Verbindungskanal während der nächsten Aufwärtsbewegung nicht oder kaum beeinflusst wird.

Insbesondere können eine Einlassöffnung des Verbindungskanals und eine Auslassöffnung des Auslasskanals so aneinander angepasst sein, dass das Fluid aus dem Auslasskanal in den Verbindungskanal, insbesondere nur, zuführbar ist oder zugeführt wird, während sich der Kolben von einem unteren Totpunkt zu einem oberen Totpunkt bewegt. Alternativ oder zusätzlich können eine Einlassöffnung des Verbindungskanals und eine Auslassöffnung des Auslasskanals so aneinander angepasst sein, dass das Fluid aus dem Auslasskanal in den Verbindungskanal nicht zuführbar ist oder nicht zugeführt wird, während sich der Kolben von einem oberen Totpunkt zu einem unteren Totpunkt bewegt.

In einer weiteren Ausführungsform deckt ein Kolbenboden des Kolbens eine Einlassöffnung des Verbindungskanals innerhalb eines Winkelbereichs ab, der kleiner als ein vorbestimmter Winkelbereich, innerhalb dessen das Pleuel schwenkbar mit dem Kolben verbunden ist, ist. Mit anderen Worten gesagt, das Pleuel schwenkt während der Auf- und Abwärtsbewegung innerhalb des vorbestimmten Winkelbereichs relativ zu dem Kolben. Während dieser Schwenkbewegung deckt der Kolbenboden des Kolbens die Einlassöffnung des Verbindungskanals nur zeitweise ab, d.h. innerhalb eines Winkelbereichs der kleiner als der vorbestimmte Winkelbereich ist.

Alternativ oder zusätzlich überdeckt eine Auslassöffnung des Auslasskanals eine Einlassöffnung des Verbindungskanals innerhalb eines Winkelbereichs, der kleiner als ein vorbestimmter Winkelbereich, innerhalb dessen das Pleuel schwenkbar mit dem Kolben verbunden ist, ist. Mit anderen Worten gesagt, das Pleuel schwenkt während der Auf- und Abwärtsbewegung innerhalb des vorbestimmten Winkelbereichs relativ zu dem Kolben. Während dieser Schwenkbewegung überdeckt die Auslassöffnung des Auslasskanals die Einlassöffnung des Verbindungskanals nur zeitweise, d.h. innerhalb eines Winkelbereichs der kleiner als der vorbestimmte Winkelbereich ist.

Damit wird die Schwenkverbindung zwischen dem Pleuel und dem Kolben während der Aufwärts- und Abwärtsbewegung gezielt genutzt, um die Einlassöffnung des Verbindungskanals freizugeben oder abzudecken. Beispielsweise kann der vorbestimmte Winkelbereich zwischen 30° und 40° betragen. Dann kann der Winkelbereich, innerhalb dessen die Auslassöffnung des Auslasskanals die Einlassöffnung des Verbindungskanals überdeckt, beispielsweise zwischen 10° und 20° betragen. Der Winkelbereich, innerhalb dessen der Kolbenboden die Einlassöffnung des Verbindungskanals abdeckt, kann beispielsweise zwischen 15° und 30° betragen.

In einer Ausführungsvariante ist eine Fluidverbindung zwischen dem Auslasskanal und dem Verbindungskanal eine intermittierende Fluidverbindung und/oder besteht im Wesentlichen nur während einer Bewegung des Kolbens von einem unterem Totpunkt zu einem oberen Totpunkt. Damit kann die Aufwärtsbewegung des Kolbens und des Pleuels gezielt zum Fördern des Fluids aus dem Auslasskanal durch den Verbindungskanals zu dem Pleuellager genutzt werden.

In einer weiteren Ausführungsvariante umgeht der Verbindungskanal ein kleines Pleuelauge (bzw. eine Kolbenbolzenbohrung) des Pleuels und/oder einen Kolbenbolzen, der das Pleuel schwenkbar mit dem Kolben verbindet.

In einem Ausführungsbeispiel ist ein Pleuelkopf des Pleuels mit einer vergrößerten Wandstärke in einem Bereich, durch den sich der Verbindungskanal erstreckt, vorgesehen. Alternativ oder zusätzlich ist der Kolben mit einer vergrößerten Wandstärke in einem Bereich, durch den sich der Auslasskanal erstreckt, vorgesehen. Die vergrößerten Wandstärken ermöglichen eine Annäherung des Pleuelkopfes und des Kolbenbodens aneinander. Somit wird eine Feinbearbeitung des Kolbenbodens und des Pleuelkopfes ermöglicht, die die Herstellung eines sehr geringen Abstands zwischen dem Kolbenboden und den Pleuelkopf in den Bereichen der Auslassöffnung des Auslasskanals und der Einlassöffnung des Verbindungskanals ermöglicht.

In einem weiteren Ausführungsbeispiel weist die Vorrichtung eine Fluideinspritzdüse auf, die auf eine Einlassöffnung eines Einlasskanals des Kolbens, der in Fluidverbindung mit dem Fluidkanal ist, gerichtet ist. Über die Fluideinspritzdüse kann Öl über den Einlasskanal in den Fluidkanal eingespritzt werden. Dieses Öl kann neben der Kühlung des Kolbens dazu verwendet werden, über den Auslasskanal und den Verbindungskanal zu dem Pleuellager geleitet zu werden, um dieses zu schmieren.

Insbesondere kann die Fluideinspritzdüse mit einem Kühlschmierfluid, zum Beispiel Öl, aus einem Kühlschmierkreislauf der Brennkraftmaschine versorgt werden.

In einem weiteren Ausführungsbeispiel ist die Fluideinspritzdüse separat zu dem Kolben und zu dem Pleuel vorgesehen. Alternativ oder zusätzlich ist die Fluideinspritzdüse in oder an einem Kurbelgehäuse aufgenommen oder befestigt.

Insbesondere kann sich der Fluidkanal ringförmig im Kolben erstrecken.

Insbesondere kann die Kurbelwelle keine Bohrungen zum Versorgen des Pleuellagers mit Schmieröl aufweisen.

Die Erfindung betrifft auch ein Kraftfahrzeug, insbesondere Nutzfahrzeug (zum Beispiel Omnibus oder Lastkraftwagen), mit einer Vorrichtung wie hierin offenbart.

Es ist auch möglich, die Vorrichtung wie hierin offenbart für Personenkraftwagen, Großmotoren, geländegängige Fahrzeuge, stationäre Motoren, Marinemotoren usw. zu verwenden.

Zusätzlich betrifft die Erfindung auch ein Verfahren zum Schmieren eines Pleuellagers an einer Kurbelwelle. Das Verfahren weist das Zuführen eines Fluids, insbesondere eines Kühlschmierfluids (zum Beispiel Öl), von einem Fluidkanal, insbesondere einem inneren Kühlfluidkanal, eines Kolbens über einen Verbindungskanal eines Pleuels zu dem Pleuellager auf.

Insbesondere kann das Verfahren die hierin offenbarte Vorrichtung verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Schnittansicht durch einen Kolben einer Brennkraftmaschine gemäß einem Ausführungsbeispiel;
- Figur 2: eine Schnittansicht durch den beispielhaften Kolben, ein Pleuel und eine Kurbelwelle einer Brennkraftmaschine; und
- Figur 3: mehrere nebeneinander angeordnete Schnittansichten, die eine Bewegung des Kolbens und des Pleuels während einer Drehung der Kurbelwelle darstellen.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

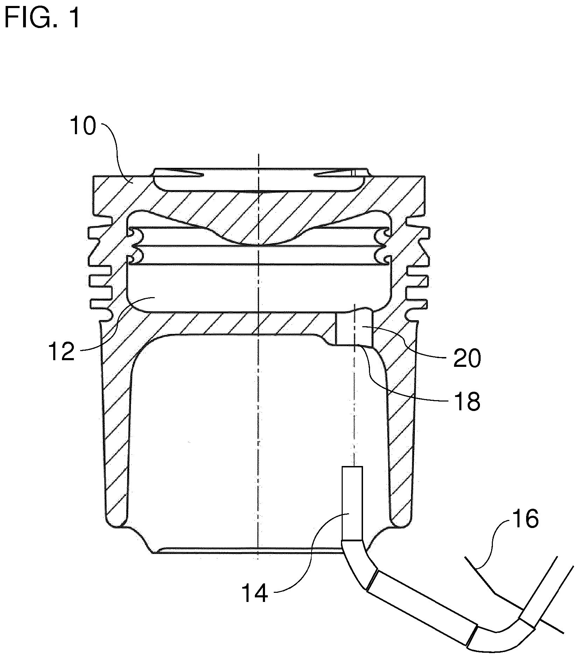

In Figur 1 ist ein Kolben 10 einer Brennkraftmaschine in einer Schnittebene, die exzentrisch zu einer Mittelachse des Kolbens 10 ist, dargestellt. Die Brennkraftmaschine kann beispielsweise in einem Kraftfahrzeug, insbesondere Nutzfahrzeug, umfasst sein. Das Nutzfahrzeug kann zum Beispiel ein Lastkraftwagen oder ein Omnibus sein. Die Brennkraftmaschine kann eine Mehrzahl von Zylindern mit mehreren Kolben 10 aufweisen.

Der Kolben 10 weist einen als inneren Kolbenkühlkanal ausgebildeten Fluidkanal 12 auf. Der Fluidkanal 12 kann sich beispielsweise ringförmig im Inneren des Kolbens 10 erstrecken. Mittels einer Fluideinspritzdüse 14 kann ein Fluid, insbesondere ein Kühlschmierfluid, zum Beispiel Öl, in den Fluidkanal 12 eingespritzt werden. Die Fluideinspritzdüse 14 kann beispielsweise an einem Kurbelgehäuse 16 (nur schematisch angedeutet) befestigt sein. Die Fluideinspritzdüse 14 ist auf eine Einlassöffnung 18 eines Einlasskanals 20 des Kolbens 10 gerichtet. Der Einlasskanal 20 mündet in den Fluidkanal 12. Durch die Einlassöffnung 18 eingespritztes Fluid von der Fluideinspritzdüse 14 gelangt über den Einlasskanal 20 in den Fluidkanal 12. Hier kühlt das Fluid den Kolben 10. Der Fluidkanal 12 kann mit einem Auslasskanal (nicht sichtbar in Figur 1) verbunden sein, der beispielsweise um 180° um die Kolbenmittelachse versetzt zu dem Einlasskanal 20 angeordnet ist.

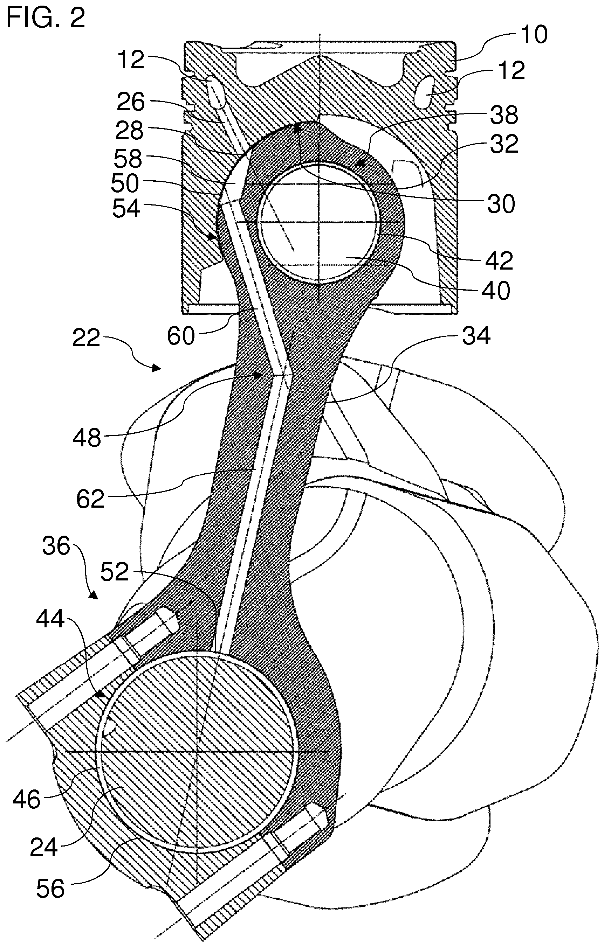

In Figur 2 ist der Kolben 10 in einer weiteren Schnittansicht dargestellt, wobei die Schnittebene zentrisch zu der Mittelachse des Kolbens 10 ist. Aus Übersichtsgründen sind die Fluideinspritzdüse 14 und das Kurbelgehäuses 16 von Figur 1 in Figur 2 nicht dargestellt.

Der Kolben 10 ist über ein Pleuel 22 gelenkig, insbesondere schwenkbar, mit einer Kurbelwelle 24 verbunden. Die Kurbelwelle 24 ist an einem Kurbelgehäuse um eine Drehachse relativ zu dem Kurbelgehäuse drehbar gelagert. Der Kolben 10 ist translatorisch relativ zu einer Zylinderwandung eines Zylinders (nicht dargestellt) bewegbar. Die translatorischen Bewegungen des Kolbens 10 im Zylinder werden in eine rotatorische Bewegung der Kurbelwelle 24 um ihre Drehachse umgewandelt. Bei den translatorischen Aufwärts- und Abwärtsbewegungen des Kolbens 10 kann sich dieser an der Zylinderwandung abstützen.

Der Kolben 10 weist einen Auslasskanal 26 auf. Der Auslasskanal 26 erstreckt sich zwischen dem Fluidkanal 12 und einer Auslassöffnung 28 in einem Kolbenboden 30 des Kolbens 10. Der Auslasskanal 26 kann ausgehend von dem Kolbenboden 30 in den Kolben 10 gebohrt sein. Die Auslassöffnung 28 ist in einem gerundeten Bereich des Kolbenbodens 30 angeordnet.

Das Pleuel 22 weist einen Pleuelkopf 32, einen Pleuelschaft 34 und einen Pleuelfuß 36 auf. Der Pleuelschaft 34 erstreckt sich zwischen dem Pleuelkopf 32 und dem Pleuelfuß 36.

Der Pleuelkopf 32 weist ein kleines Pleuelauge 38 auf. In dem kleinen Pleuelauge 38 ist ein Kolbenbolzen 40 in einem bspw. als Gleitlager ausgebildeten Kolbenbolzenlager 42 gelagert. Der Kolbenbolzen 40 verbindet das Pleuel 22 schwenkbar mit dem Kolben 10. Im Einzelnen ist das Pleuel 22 relativ zu dem Kolben 10 während der Aufwärts- und Abwärtsbewegungen des Kolbens 10 innerhalb eines vorbestimmten Winkelbereichs, zum Beispiel zwischen 30° und 40°, schwenkbar. Der Kolbenbolzen 40 und das Kolbenbolzenlager 42 können durch Fluidnebel, zum Beispiel Ölnebel, der aus der Fluideinspritzung der Fluideinspritzdüse 14 (siehe Figur 1) resultiert, geschmiert werden. Der Kolbenbolzen 40 ist axial in dem Kolben 10 gesichert, z.B. über Sicherungsringe.

Der Pleuelfuß 36 weist ein großes Pleuelauge 44 auf. In dem großen Pleuelauge 44 ist ein bspw. als Gleitlager ausgebildetes Pleuellager 46 aufgenommen. Das Pleuellager 46 verbindet das Pleuel 22 schwenkbar mit einem Hubzapfen der Kurbelwelle 24.

Um eine Schmierung des Pleuellagers 46 zu realisieren, weist das Pleuel 22 einen Verbindungskanal 48 auf. Der Verbindungskanal 48 kann eine Fluidverbindung zwischen dem Auslasskanal 26 und dem großen Pleuelauge 44 bilden. Damit bilden der Fluidkanal 12, der Auslasskanal 26 und der Verbindungskanal 48 eine Vorrichtung zum Schmieren des Pleuellagers 46.

Der Verbindungskanal 48 erstreckt sich zwischen einer Einlassöffnung 50 und einer Auslassöffnung 52. Die Einlassöffnung 50 ist in einer gerundeten Außenumfangsfläche 54 des Pleuelkopfes 32 vorgesehen. Die Auslassöffnung 52 ist in einer Innenumfangsfläche 56 des großen Pleuelauges 44 vorgesehen.

Der Verbindungskanal 48 weist beispielhaft einen Einlassbereich 58, eine Schrägbohrung 60 und eine Längsbohrung 62 auf. Der Einlassbereich 58 ist durch eine stufenförmige Ausnehmung an der Außenumfangsfläche 54 des Pleuelkopfes 32 gebildet. Die Schrägbohrung 60 erstreckt sich von einer Bodenfläche des Einlassbereichs 58 zu dem Pleuelschaft 34. Die Schrägbohrung 60 umgeht das kleine Pleuelauge 38 und den Kolbenbolzen 40. Die Schrägbohrung 60 kann ausgehend von der Bodenfläche der Ausnehmung gebohrt sein. Die Schrägbohrung 60 ist eine Bohrung schräg zur Längsachse des Pleuels 22. Die Längsbohrung 62 erstreckt sich von der Innenumfangsfläche 56 des großen Pleuelauge 44 durch den Pleuelschaft 34 zu einem Ende der Schrägbohrung 60. Die Längsbohrung 62 kann sich bspw. längs oder parallel zu einer Mittellängsachse des Pleuels 22 erstrecken. Die Längsbohrung 62 kann ausgehend von der Innenumfangsfläche 56 gebohrt sein.

Im Bereich der Auslassöffnung 28 und der Einlassöffnung 50 sind der Kolbenboden 30 und der Pleuelkopf 32 speziell aneinander angepasst. Der Kolbenboden 30 und der Pleuelkopf 32 sind hier so zueinander bearbeitet, dass nur ein kleiner Spalt zwischen dem Kolbenboden 30 und der Außenumfangsfläche 54 des Pleuelkopfes 32 besteht. Der Spalt kann beispielsweise kleiner als 0,1 cm, insbesondere kleiner als 0,01 cm sein. Vorzugsweise kann der Spalt in einem Bereich zwischen 0,01 cm und 0,001 cm liegen. Um die maschinelle Herstellung eines solchen Spaltmaßes zu ermöglichen, weisen der Pleuelkopf 32 und der Kolben 10 in diesem Bereich eine vergrößerte Materialstärke auf. Der Spalt verhindert, dass der Pleuelkopf 32 an dem Kolbenboden 30 reibt. Gleichzeitig ermöglicht der Spalt, dass bei Überdeckung der Auslassöffnung 28 und der Einlassöffnung 50 eine Fluidverbindung zwischen dem Auslasskanal 26 und dem Verbindungskanal 48 besteht.

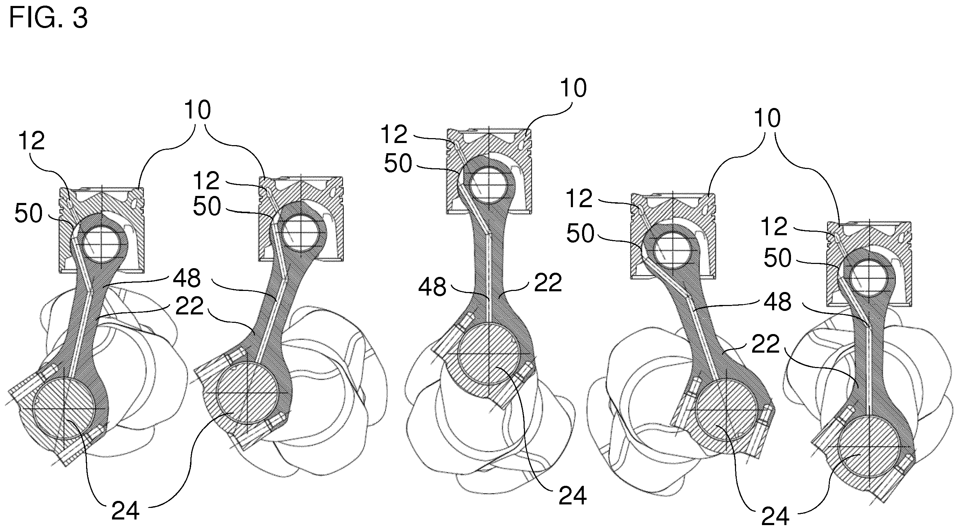

Wie nachfolgend im Detail unter Bezugnahme auf die Figur 3 beschrieben ist, überstreichen sich der Kolbenboden 30 im Bereich der Auslassöffnung 28 und der Pleuelkopf 32 im Bereich der Einlassöffnung 50 während des Betriebs der Brennkraftmaschine, sodass eine intermittierende Fluidverbindung zwischen dem Fluidkanal 12 und dem Pleuellager 46 gebildet ist.

In Figur 3 ist der Kolben 10 während einer Aufwärts- und Abwärtsbewegung dargestellt. Bei der Aufwärtsbewegung bewegt sich der Kolben 10 von einem sogenannten unteren Totpunkt zu einem sogenannten oberen Totpunkt. Bei der Abwärtsbewegung bewegt sich der Kolben von dem oberen Totpunkt zu dem unteren Totpunkt.

Während der Aufwärtsbewegung überdecken sich die Auslassöffnung 28 und die Einlassöffnung 50. Die Überdeckung findet innerhalb eines Winkelbereichs (zum Beispiel kleiner als 10°, 15° oder 20°) statt, der kleiner als der vorbestimmte Winkelbereich, innerhalb dessen das Pleuel 22 schwenkbar mit dem Kolben 10 verbunden ist, ist. Fluid aus dem Fluidkanal 12 wird während der Aufwärtsbewegung aus der Auslassöffnung 28 über den Spalt und die Einlassöffnung 50 in den Verbindungskanal 48 gedrückt. Beispielsweise können hierbei durch die hohe Beschleunigung des Pleuels 22 Fluiddrücke bis zu 6 bar erreicht werden. Das Fluid kann zu dem Pleuellager 46 fließen und dieses schmieren. Das Fluid kann schließlich beispielsweise über Radialbohrungen (nicht dargestellt) im Pleuelfuß 36 in eine Ölwanne abfließen.

Während der Abwärtsbewegung wird die Einlassöffnung 50 von dem Kolbenboden 30 abgedeckt. Die Abdeckung findet innerhalb eines Winkelbereichs (zum Beispiel kleiner als 15°, 20° oder 25°) statt, der kleiner als der vorbestimmte Winkelbereich, innerhalb dessen das Pleuel 22 schwenkbar mit dem Kolben 10 verbunden ist, ist. Durch die Abdeckung der Einlassöffnung 50 kann eine Kavitationsneigung des Fluids in dem Verbindungskanal 48 während der Abwärtsbewegung verringert werden. Die Kavitation könnte sonst bei der nächsten Aufwärtsbewegung einen Durchfluss durch den Verbindungskanal 48 erheblich beeinträchtigen.

Der hierin offenbarten Vorrichtung zum Schmieren des Pleuellagers 46 basiert auf einem innovativen Schmierverfahren. Dieses Verfahren zum Schmieren weist das Zuführen, insbesondere Einspritzen, eines Fluids, zum Beispiel Öl, mittels der Fluideinspritzdüse 14 in den Fluidkanal 12 des Kolbens 10 auf. Das Verfahren weist ferner das Zuführen des Fluids von dem Fluidkanal 12 über den Auslasskanal 26 des Kolbens 10 und den Verbindungskanal 48 des Pleuels 22 zu dem Pleuellager 46 auf. Es wird darauf hingewiesen, dass zum Durchführen des Verfahrens auch andere Konfigurationen insbesondere des Auslasskanals 26 und des Verbindungskanals 48 möglich sind.

Die Erfindung ist i nach dem Schutzbereich der nachfolgenden Ansprüche definiert.

### Bezugszeichenliste

- 10: Kolben
- 12: Fluidkanal
- 14: Fluideinspritzdüse
- 16: Kurbelgehäuse
- 18: Einlassöffnung
- 20: Einlasskanal
- 22: Pleuel
- 24: Kurbelwelle
- 26: Auslasskanal
- 28: Auslassöffnung
- 30: Kolbenboden
- 32: Pleuelkopf
- 34: Pleuelschaft
- 36: Pleuelfuß
- 38: Kleines Pleuelauge
- 40: Kolbenbolzen
- 42: Kolbenbolzenlager
- 44: Großes Pleuelauge
- 46: Pleuellager
- 48: Verbindungskanal
- 50: Einlassöffnung
- 52: Auslassöffnung
- 54: Außenumfangsfläche
- 56: Innenumfangsfläche
- 58: Einlassbereich
- 60: Schrägbohrung
- 62: Längsbohrung

## Patentansprüche

1. Vorrichtung zum Schmieren eines Pleuellagers (46) an einer Kurbelwelle (24) einer Brennkraftmaschine, aufweisend:
einen Kolben (10) mit einem Fluidkanal (12), insbesondere einem inneren Kolbenkühlfluidkanal, und einem Auslasskanal (26) in Fluidverbindung mit dem Fluidkanal (12);
ein Pleuel (22), das gelenkig, insbesondere schwenkbar, mit dem Kolben (10) verbunden ist und ein großes Pleuelauge (44) und einen Verbindungskanal (48) aufweist, wobei:
das große Pleuelauge (44) zur Aufnahme des Pleuellagers (46) ausgebildet ist; und
der Verbindungskanal (48) die Fluidverbindung zwischen dem Auslasskanal (26) und dem großen Pleuelauge (44) bildet, so dass ein Fluid, insbesondere ein Kühlschmierfluid, von dem Fluidkanal (12) über den Auslasskanal (26) und den Verbindungskanal (48) zu dem großen Pleuelauge (44) zugeführt wird.

2. Vorrichtung nach Anspruch 1, wobei:
der Auslasskanal (26) eine Auslassöffnung (28) in einem, insbesondere gerundeten, Kolbenboden (30) des Kolbens (10) aufweist; und/oder
der Verbindungskanal (48) eine Einlassöffnung (50) in einer, insbesondere gerundeten, Außenfläche (54), insbesondere einer Außenumfangsfläche, eines Pleuelkopfes (32) des Pleuels (22) aufweist.

3. Vorrichtung nach Anspruch 1 oder Anspruch 2, wobei:
der Verbindungskanal (48) einen Einlassbereich (48) aufweist, der durch eine stufenförmige Ausnehmung in einer Außenfläche (54), insbesondere einer Außenumfangsfläche, eines Pleuelkopfes (32) des Pleuels (22) gebildet ist.

4. Vorrichtung nach Anspruch 3, wobei der Verbindungskanal (48) ferner aufweist:
eine Schrägbohrung (60), die sich von der Ausnehmung und beabstandet zu einem kleinen Pleuelauge (38) des Pleuels (22) durch den Pleuelkopf (32) zu einem Pleuelschaft (34) des Pleuels (22) erstreckt; und
eine Längsbohrung (62), die sich von dem großen Pleuelauge (44) durch den Pleuelschaft (34) zu der Schrägbohrung (60) erstreckt.

5. Vorrichtung nach einem der vorherigen Ansprüche, wobei:
ein Pleuelkopf (32) des Pleuels (22) und ein Kolbenboden (30) des Kolbens (10) so aneinander angepasst sind, dass ein Abstand zwischen einem an eine Auslassöffnung (28) des Auslasskanals (26) angrenzenden Bereich des Kolbenbodens (30) und einem an eine Einlassöffnung (50) des Verbindungskanals (48) angrenzenden Bereich des Pleuelkopfes (32) kleiner als 0,1 cm, insbesondere kleiner als 0,01 cm, ist.

6. Vorrichtung nach Anspruch 5, wobei:
der Bereich des Kolbenbodens (30) und der Bereich des Pleuelkopfes (32) einander während einer Schwenkbewegung zwischen dem Kolben (10) und dem Pleuel (22) überstreichen.

7. Vorrichtung nach einem der vorherigen Ansprüche, wobei:
ein Kolbenboden (30) des Kolbens (10) eine Einlassöffnung (50) des Verbindungskanals (48) während einer Bewegung des Kolbens (10) von einem oberen Totpunkt zu einem unteren Totpunkt, insbesondere zur Verringerung der Kavitationsneigung im Verbindungskanal (48), abdeckt; und/oder
eine Auslassöffnung (28) des Auslasskanals (26) eine Einlassöffnung (50) des Verbindungskanals (48), insbesondere nur, während einer Bewegung des Kolbens (10) von einem unteren Totpunkt zu einem oberen Totpunkt überdeckt.

8. Vorrichtung nach einem der vorherigen Ansprüche, wobei:
ein Kolbenboden (30) des Kolbens (10) eine Einlassöffnung (50) des Verbindungskanals (48) innerhalb eines Winkelbereichs abdeckt, der kleiner als ein vorbestimmter Winkelbereich, innerhalb dessen das Pleuel (22) schwenkbar mit dem Kolben (10) verbunden ist, ist; und/oder
eine Auslassöffnung (28) des Auslasskanals (26) eine Einlassöffnung (50) des Verbindungskanals (48) innerhalb eines Winkelbereichs überdeckt, der kleiner als ein vorbestimmter Winkelbereich, innerhalb dessen das Pleuel (22) schwenkbar mit dem Kolben (10) verbunden ist, ist.

9. Vorrichtung nach einem der vorherigen Ansprüche, wobei:
eine Fluidverbindung zwischen dem Auslasskanal (26) und dem Verbindungskanal (48) eine intermittierende Fluidverbindung ist und/oder im Wesentlichen nur während einer Bewegung des Kolbens (10) von einem unterem Totpunkt zu einem oberen Totpunkt besteht.

10. Vorrichtung nach einem der vorherigen Ansprüche, wobei:
der Verbindungskanal (48) ein kleines Pleuelauge (38) des Pleuels (22) und/oder einen Kolbenbolzen (40), der das Pleuel (22) schwenkbar mit dem Kolben (10) verbindet, umgeht.

11. Vorrichtung nach einem der vorherigen Ansprüche, wobei:
ein Pleuelkopf (32) des Pleuels (22) mit einer vergrößerten Wandstärke in einem Bereich, durch den sich der Verbindungskanal (48) erstreckt, vorgesehen ist; und/oder
der Kolben (10) mit einer vergrößerten Wandstärke in einem Bereich, durch den sich der Auslasskanal (26) erstreckt, vorgesehen ist.

12. Vorrichtung nach einem der vorherigen Ansprüche, ferner aufweisend:
eine Fluideinspritzdüse (14), die auf eine Einlassöffnung (18) eines Einlasskanals (20) des Kolbens (10), der in Fluidverbindung mit dem Fluidkanal (12) ist, gerichtet ist.

13. Vorrichtung nach Anspruch 12, wobei:
die Fluideinspritzdüse (14) separat zu dem Kolben (10) und zu dem Pleuel (22) vorgesehen ist; und/oder
die Fluideinspritzdüse (14) in oder an einem Kurbelgehäuse (16) aufgenommen oder befestigt ist.

14. Kraftfahrzeug, insbesondere Nutzfahrzeug, mit einer Vorrichtung nach einem der vorherigen Ansprüche.

15. Verfahren zum Schmieren eines Pleuellagers (46) an einer Kurbelwelle (24) mittels einer Vorrichtung nach einem der Ansprüche 1 bis 13, aufweisend:
Zuführen eines Fluids, insbesondere eines Kühlschmierfluids, von einem Fluidkanal (12), insbesondere einem inneren Kühlfluidkanal, eines Kolbens (10) über einen Verbindungskanal (48) eines Pleuels (22) zu dem Pleuellager (46).

## Claims

1. Device for lubricating a connecting rod bearing (46) on a crankshaft (24) of an internal combustion engine, having:
a piston (10) having a fluid channel (12), in particular an internal piston cooling fluid channel, and an outlet channel (26) in fluid connection with the fluid channel (12);
a connecting rod (22), which is connected to the piston (10) in an articulated, in particular pivotable, manner and has a large connecting rod eye (44) and a connecting channel (48),
wherein:
the large connecting rod eye (44) is formed for receiving the connecting rod bearing (46); and
the connecting channel (48) forms the fluid connection between the outlet channel (26) and the large connecting rod eye (44) so that a fluid, in particular a cooling lubricating fluid is fed from the fluid channel (12) to the large connecting rod eye (44) via the outlet channel (26) and the connecting channel (48).

2. Device according to Claim 1, wherein:
the outlet channel (26) has an outlet opening (28) in an, in particular rounded, piston head (30) of the piston (10); and/or
the connecting channel (48) has an inlet opening (50) in an, in particular rounded, outer surface (54), in particular an outer circumferential surface, of a small end (32) of the connecting rod (22).

3. Device according to Claim 1 or Claim 2, wherein:
the connecting channel (48) has an inlet region (48), which is formed by a step-shaped recess in an outer surface (54), in particular an outer circumferential surface, of a small end (32) of the connecting rod (22).

4. Device according to Claim 3, wherein the connecting channel (48) further has:
a slant bore (60), which extends from the recess and, at a spacing from a small connecting rod eye (38) of the connecting rod (22), through the small end (32) to a connecting rod shaft (34) of the connecting rod (22); and
a longitudinal bore (62), which extends from the large connecting rod eye (44) through the connecting rod shaft (34) to the slant bore (60).

5. Device according to one of the preceding claims, wherein:
a small end (32) of the connecting rod (22) and a piston head (30) of the piston (10) are adapted to one another so that a spacing between a region of the piston head (30) which adjoins an outlet opening (28) of the outlet channel (26) and a region of the small end (32) which adjoins an inlet opening (50) of the connecting channel (48) is smaller than 0.1 cm, in particular smaller than 0.01 cm.

6. Device according to Claim 5, wherein:
the region of the piston head (30) and the region of the small end (32) sweep over one another during a pivotal movement between the piston (10) and the connecting rod (22).

7. Device according to one of the preceding claims, wherein:
a piston head (30) of the piston (10) covers an inlet opening (50) of the connecting channel (48) during a movement of the piston (10) from an upper dead centre to a lower dead centre, in particular for reducing the cavitation tendency in the connecting channel (48); and/or
an outlet opening (28) of the outlet channel (26) overlaps an inlet opening (50) of the connecting channel (48), in particular only, during a movement of the piston (10) from a lower dead centre to an upper dead centre.

8. Device according to one of the preceding claims, wherein:
a piston head (30) of the piston (10) covers an inlet opening (50) of the connecting channel (48) within an angular range which is smaller than a predetermined angular range within which the connecting rod (22) is pivotably connected to the piston (10); and/or
an outlet opening (28) of the outlet channel (26) overlaps an inlet opening (50) of the connecting channel (48) within an angular range which is smaller than a predetermined angular range within which the connecting rod (22) is pivotably connected to the piston (10).

9. Device according to one of the preceding claims, wherein:
a fluid connection between the outlet channel (26) and the connecting channel (48) is an intermittent fluid connection and/or exists substantially only during a movement of the piston (10) from a lower dead centre to an upper dead centre.

10. Device according to one of the preceding claims, wherein:
the connecting channel (48) bypasses a small connecting rod eye (38) of the connecting rod (22) and/or a piston pin (40) which connects the connecting rod (22) pivotably to the piston (10).

11. Device according to one of the preceding claims, wherein:
a small end (32) of the connecting rod (22) is provided with an increased wall thickness in a region through which the connecting channel (48) extends; and/or
the piston (10) is provided with an increased wall thickness in a region through which the outlet channel (26) extends.

12. Device according to one of the preceding claims, further having:
a fluid injecting nozzle (14), which is directed towards an inlet opening (18) of an inlet channel (20) of the piston (10), which is in fluid communication with the fluid channel (12).

13. Device according to Claim 12, wherein:
the fluid injecting nozzle (14) is provided separately from the piston (10) and from the connecting rod (22); and/or
the fluid injecting nozzle (14) is received or secured in or on a crankcase (16).

14. Motor vehicle, in particular commercial vehicle, having a device according to one of the preceding claims.

15. Method for lubricating a connecting rod bearing (46) on a crankshaft (24) by means of a device according to one of Claims 1 to 13, comprising:
feeding a fluid, in particular a cooling lubricating fluid, from a fluid channel (12), in particular an internal cooling fluid channel, of a piston (10) to the connecting rod bearing (46) via a connecting channel (48) of a connecting rod (22).

## Revendications

1. Dispositif de lubrification d'un palier de bielle (46) sur un vilebrequin (24) d'un moteur à combustion interne, ledit dispositif comprenant :
un piston (10) pourvu d'un canal de fluide (12), en particulier d'un canal de fluide de refroidissement de piston interne, et un canal de sortie (26) en communication fluidique avec le canal de fluide (12) ;
une bielle (22) qui est reliée de manière articulée, en particulier pivotante, au piston (10) et qui comporte un grand œillet de bielle (44) et un canal de liaison (48) :
le grand œillet de bielle (44) étant conçu pour recevoir le palier de bielle (46) ; et
le canal de liaison (48) formant la liaison fluidique entre le canal de sortie (26) et le grand œillet de bielle (44) de sorte qu'un fluide, en particulier un fluide de lubrification et de refroidissement, est acheminé du canal de fluide (12) au grand œillet de bielle (44) par le biais du canal de sortie (26) et du canal de liaison (48).

2. Dispositif selon la revendication 1, dans lequel :
le canal de sortie (26) comporte une ouverture de sortie (28) ménagée dans une tête de piston (30), notamment arrondie, du piston (10) ; et/ou
le canal de liaison (48) comporte une ouverture d'entrée (50) ménagée dans une surface extérieure (54), notamment arrondie, en particulier une surface périphérique extérieure, d'une tête de bielle (32) de la bielle (22).

3. Dispositif selon la revendication 1 ou la revendication 2 :
le canal de liaison (48) comportant une région d'entrée (48) qui est formée par un évidement en forme de gradin ménagé dans une surface externe (54), en particulier une surface périphérique externe, d'une tête de bielle (32) de la bielle (22).

4. Dispositif selon la revendication 3, le canal de liaison (48) comprenant en outre :
un alésage incliné (60) qui s'étend depuis l'évidement, et à distance d'un petit œillet de bielle (38) de la bielle (22) ménagé à travers la tête de bielle (32), jusqu'à un arbre de bielle (34) de la bielle (22) ; et
un alésage longitudinal (62) qui s'étend du grand œillet de bielle (44), ménagé à travers l'arbre de bielle (34), jusqu'à l'alésage incliné (60).

5. Dispositif selon l'une des revendications précédentes :
une tête de bielle (32) de la bielle (22) et une tête de piston (30) du piston (10) étant adaptées l'une à l'autre de telle sorte qu'une distance entre une région de la tête de piston (30), qui est adjacente à une ouverture de sortie (28) du canal de sortie (26), et une région de la tête de bielle (32), qui est adjacente à une ouverture d'entrée (50) du canal de liaison (48), soit inférieure à 0,1 cm, en particulier inférieure à 0,01 cm.

6. Dispositif selon la revendication 5 :
la région de la tête de piston (30) et la région de la tête de bielle (32) se couvrant l'une l'autre lors d'un mouvement de pivotement entre le piston (10) et la bielle (22).

7. Dispositif selon l'une des revendications précédentes :
une tête de piston (30) du piston (10) recouvrant une ouverture d'entrée (50) du canal de liaison (48) pendant un déplacement du piston (10) d'un point mort haut à un point mort bas, notamment pour réduire la tendance à la cavitation dans le canal de liaison (48) ; et/ou
une ouverture de sortie (28) du canal de sortie (26) recouvrant une ouverture d'entrée (50) du canal de liaison (48), en particulier uniquement pendant un déplacement du piston (10) du point mort bas au point mort haut.

8. Dispositif selon l'une des revendications précédentes :
une tête de piston (30) du piston (10) recouvrant une ouverture d'entrée (50) du canal de liaison (48) dans une plage angulaire qui est inférieure à une plage angulaire prédéterminée à l'intérieur de laquelle la bielle (22) est reliée de manière pivotante au piston (10) ; et/ou
une ouverture de sortie (28) du canal de sortie (26) recouvrant une ouverture d'entrée (50) du canal de liaison (48) dans une plage angulaire qui est inférieure à une plage angulaire prédéterminée à l'intérieur de laquelle la bielle (22) est reliée de manière pivotante au piston (10) .

9. Dispositif selon l'une des revendications précédentes :
une liaison fluidique entre le canal de sortie (26) et le canal de liaison (48) est une liaison fluidique intermittente et/ou n'existe sensiblement que pendant un déplacement du piston (10) d'un point mort bas à un point mort haut.

10. Dispositif selon l'une des revendications précédentes :
le canal de liaison (48) contournant un petit œillet de bielle (38) de la bielle (22) et/ou un axe de piston (40) qui relie de manière pivotante la bielle (22) au piston (10).

11. Dispositif selon l'une des revendications précédentes :
une tête de bielle (32) de la bielle (22) étant pourvue d'une épaisseur de paroi agrandie dans une région à travers laquelle s'étend le canal de liaison (48) ; et/ou
le piston (10) étant pourvu d'une épaisseur de paroi agrandie dans une région à travers laquelle s'étend le canal de sortie (26).

12. Dispositif selon l'une des revendications précédentes, comprenant en outre :
une buse d'injection de fluide (14) qui est dirigée vers une ouverture d'entrée (18) d'un canal d'entrée (20) du piston (10) qui est en communication fluidique avec le canal de fluide (12).

13. Dispositif selon la revendication 12 :
la buse d'injection de fluide (14) étant prévue séparément du piston (10) et de la bielle (22) ; et/ou
la buse d'injection de fluide (14) étant reçue ou fixée dans ou sur un carter de vilebrequin (16).

14. Véhicule automobile, en particulier véhicule utilitaire, comprenant un dispositif selon l'une des revendications précédentes.

15. Procédé de lubrification d'un palier de bielle (46) sur un vilebrequin (24) au moyen d'un dispositif selon l'une des revendications 1 à 13, le procédé comprenant les étapes suivantes :
acheminer un fluide, en particulier un fluide de lubrification et de refroidissement, depuis un canal de fluide (12), en particulier un canal de fluide de refroidissement interne, d'un piston (10) au palier de bielle (46) par le biais d'un canal de liaison (48) d'une bielle (22).
